# EUROPÄISCHE PATENTANMELDUNG

(11) **EP 1 701 281 A1**
(43) Veröffentlichungstag der Anmeldung: **13.09.2006**
(21) Anmeldenummer: 06004774.3
(22) Anmeldetag: 08.03.2006
(51) Int. Cl.: G06F 21/00

(54) **Verfahren und System zum Einloggen in einen Dienst**

(30) Priorität: 08.03.2005 DE 102005011039
(71) Anmelder: 1&1 Internet AG, 56410 Montabaur (DE)
(72) Erfinder: Fitz, Christian, 76185 Karlsruhe (DE)
(74) Vertreter: DTS München

(57) **Zusammenfassung**

Vorgeschlagen werden ein Verfahren und ein System, bei dem zum Einloggen eines Nutzers (U1) über ein mit einem Informationsnetz (WWW) verbundenes Nutzer-Endgerät (PC) in einen angebotenen Nutzer-Dienst (SRV) folgende Schritte ausgeführt werden: Mittels einer Eingabe einer Nutzerkennung (ID1), wird das Einloggen versucht. Dann wird mittels Vorgaben in einem Nutzerprofil (P1) geprüft, ob für ein erfolgreiches Einloggen sowohl die Eingabe eines Zugangskennwortes (PW1) wie auch zusätzlich das Einstecken eines zugangsberechtigungs-Hardwaresteckers (D1) am Nutzer-Endgerät (PC) erforderlich sind. Falls beides erforderlich ist, werden eine Kodierung (C1) des Hardwaresteckers (D1) sowie das Zugangskennwort (PW1) geprüft; andernfalls wird zumindest das Zugangskennwort geprüft. Falls alle zu prüfenden Vorgaben in dem Nutzerprofil (P1) erfüllt werden, wird das Einloggen erfolgreich abgeschlossen.

Damit wird eine mehrfache Sicherung für das Einloggen bereit gestellt, nämlich eine software-basierte Sicherung über Nutzer-Kennung (ID1 - "User ID") und Zugangskennwort (PW1 - "Passwort") sowie eine zusätzliche, hardware-basierte Sicherung über einen Hardwarestecker (D1- "Dongle"), der in das Nutzer-Endgerät (PC) eingesteckt wird. Diese Einlogg-Prozedur wird anhand von Vorgaben gesteuert, die in einem Nutzerprofil (P1) auf dem Web-Server des Dienstes (SRV) abgelegt sind und die der Nutzer selbst vorgeben kann.

## Beschreibung

### Gebiet der Erfindung

Die Erfindung betrifft ein Verfahren und ein System zum Einloggen in einen Nutzer-Dienst über ein mit einem Informationsnetz verbundenes Nutzer-Endgerät.

### Hintergrund der Erfindung

In Informationsnetzen wie dem Internet, insbesondere dem sog. World Wide Web (kurz: WWW), werden verschiedenste Nutzer-Dienste angeboten. Dies sind z.B. Kommunikations- und Nachrichten-Dienste wie klassische Text-Email, HTML-Email oder Video-Mail. Weitere bekannte Beispiele sind Instant-Messaging, Chat, SMS, MMS oder auch Sprach-Dienste (Voicebox, VoIP) usw. Werden viele verschiedene Kommunikations- und Nachrichten-Dienste innerhalb eines Systems angeboten, so spricht man auch von Unified-Messaging (kurz: UMS). Einen UMS-Dienst bietet die Anmelderin unter der URL www.freemail.de an. Es gibt Dienste mit öffentlich zugänglichen Bereichen, auf die jeder Internet-Nutzer ohne Einschränkungen zugreifen kann. Dies sind z.B. PortalDienste, wie sie die Anmelderin unter der URL www.web.de anbietet. Andere Dienste oder Bereiche davon sind nur für registrierte Nutzer zugänglich, die sich in den Dienst durch sog. Einloggen (Englisch: LogIn) einbuchen müssen. Für das Einloggen wird herkömmlicherweise eine LogIn-Maske angezeigt, in die der Nutzer seine Nutzerkennung (User ID) und ein Zugangskennwort (Password) eingibt. Diese Daten sind dem jeweilige Nutzer zugeordnet und werden beim Einloggen systemseitig geprüft. Sind die Daten korrekt, so erhält der Nutzer Zugriff auf den Dienst. Am Beispiel von www.freemail.de bedeutet dies, dass der Nutzer seine UserID in das Feld "Nutzer" und das richtige Kennwort in das Feld "Passwort" eingibt. Dieses bekannte Einlogg-Verfahren kann über jeden Browser durchgeführt werden. Somit kann sich der Nutzer überall und von jedem Endgerät mit Internet-Anschluss aus in den Dienst einbuchen. Er braucht lediglich die richtigen LogIn-Daten einzugeben. Das Einloggen erfolgt also ausschließlich mit Software-Mitteln.

Es sind aber auch Hardware-Mittel bekannt, mit denen der Zugriff auf Nutzer-Dienste abgesichert wird. Dabei handelt es sich um Hardwarestecker, sog. Dongles oder Kodierstecker, die der Nutzer am Endgerät (z.B. in einen USB-Slot) einstecken muss. Diese Dongles dienten ursprünglich dem Kopierschutz von Software; sie werden aber auch als Zugangsberechtigungs-Hardwarestecker verwendet. Auf dem Stecker ist zumindest ein Schlüsselcode gespeichert, der den Zugang zu dem Dienst ermöglicht. Auch weitere Zugangsdaten, insbesondere UderID und Passwort, können dort gespeichert sein. Die Datenspeicherung kann hartverdrahtet sein, ist aber vorzugsweise in programmierbaren Bauteilen (EEPROM, Flash-Speicher, PLD etc.), abgelegt. Aus der WO 2005/010730 A2 ist ein solcher Stecker bekannt, der auch dazu dient dem Nutzer Zugang zu einem bestimmten Nutzer-Dienst zu gewähren. Wie dort in den Abschnitten [0010] und [0048] beschrieben wird, ist auf dem Stecker ein eindeutige Kennung ("unique identifier"), d.h. ein Schlüsselcode, gespeichert, mit dem eine Nutzer-Authentifizierung durchgeführt werden kann. Dazu wird durch den Server zunächst anhand des Schlüsselcodes die eigentliche Nutzer-Kennung ("owner's login ID") gesucht. Die Nutzer-Kennung wird dann von der Client-Software zusammen mit dem Zugangskennwort ("password") und dem Schlüsselcode gesendet. Anschließend wird vom Server geprüft, ob die Nutzer-Kennung ("login ID") zum Schlüsselcode ("device identifier") passt. Wenn dies der Fall ist, verifiziert der Server das Zugangskennwort ("password"). Dieses bekannte Verfahren basiert darauf, dass der Schlüsselcode mit der Nutzer-Kennung abgeglichen wird ("The server checks whether the login ID matches the storage device identifier.") Der Stecker fungiert also lediglich als Verifikator für die eigentlichen Nutzerdaten. Wie u.a. aus der dortigen Zusammenfassung hervor geht, liegt die wesentliche Anwendung des dort beschriebenen Steckers darin, eine Synchronisation von den auf dem Stecker gespeicherten Daten mit entsprechenden Daten, die auf dem Server gespeichert sind, durchzuführen. Darüber hinausgehende Funktionen des Steckers, die sich auf den Zugang zu dem Nutzer-Dienst beziehen, sind jedoch dort nicht beschrieben. Auch wird dort nicht über Maßnahmen geschrieben, die den Einsatz eines solchen Steckers im Zusammenhang mit dem Einloggen in einen Nutzer-Dienst nutzerfreundlich gestalten.

Daher ist es Aufgabe der Erfindung, ein Verfahren und ein System der eingangs genannten Art vorzuschlagen, die für ein sehr sicheres und nutzerfreundliches Einloggen in einen Nutzer-Dienst geeignet sind.

Gelöst wird die Aufgabe durch ein Verfahren mit den Merkmalen nach Anspruch 1 sowie durch ein System mit den Merkmalen nach dem nebengeordneten Anspruch.

Demnach wird ein Verfahren vorgeschlagen, bei dem zum Einloggen eines Nutzers über ein mit einem Informationsnetz verbundenes Nutzer-Endgerät in einen in dem Informationsnetz angebotenen Nutzer-Dienst folgende Schritte ausgeführt werden:

Mittels einer Eingabe einer Nutzerkennung, die dem Nutzer zugeordnet ist, wird das Einloggen in den Nutzer-Dienst versucht. Dann wird mittels Vorgaben in einem Nutzerprofil, das dem Nutzer zugeordnet ist, geprüft, ob für ein erfolgreiches Einloggen sowohl die Eingabe eines Zugangskennwortes wie auch zusätzlich das Einstecken eines Zugangsberechtigungs-Hardwaresteckers am Nutzer-Endgerät erforderlich sind. Falls beides erforderlich ist, werden eine Kodierung (Schlüsselcode) des Zugangsberechtigungs-Hardwaresteckers sowie das Zugangskennwort geprüft; andernfalls wird zumindest das Zugangskennwort geprüft. Falls alle zu prüfenden Vorgaben in dem Nutzerprofil erfüllt werden, wird das Einloggen erfolgreich abgeschlossen.

Vorgeschlagen wird auch ein erfindungsgemäßes System zur Durchführung des Verfahrens. Das System umfasst zumindest einen mit dem Informationsnetz verbundenen Dienste-Rechner, insbesondere Web-Server, auf dem der Nutzer-Dienst, vorzugsweise ein Email-Dienst, eingerichtet ist und der den Zugriff darauf überwacht. Mit dem Dienste-Rechner ist über das Informationsnetz, das vorzugsweise das Internet ist, zumindest ein Nutzer-Endgerät verbunden, mittels dem der Nutzer auf den Nutzer-Dienst zugreift. Das Endgerät verfügt über eine Hardware-Schnittstelle, über die ein Zugangsberechtigungs-Hardwarestecker mit dem Nutzer-Endgerät verbunden werden kann. Vorzugsweise ist die Hardware-Schnittstelle ein USB-Port, in die ein Zugangsberechtigungs-Hardwarestecker in Gestalt eines USB-Dongle von dem Nutzer eingesteckt wird.

Das erfindungsgemäße Verfahren und System stellen also eine mehrfache Sicherung für das Einloggen bereit, nämlich eine software-basierte Sicherung über Nutzer-Kennung (User ID) und Zugangskennwort (Passwort) sowie eine zusätzliche, hardwarebasierte Sicherung über einen Zugangsberechtigungs-Hardwarestecker (Dongle), der in das Nutzer-Endgerät eingesteckt wird. Diese mehrfache Sicherung, insbesondere die Überprüfung, ob für ein erfolgreiches Einloggen zusätzlich Hardwarestecker vorhanden sein muss, wird anhand von Vorgaben gesteuert, die in einem Nutzerprofil auf dem Dienste-Rechner abgelegt sind und die der Nutzer selbst vorgeben kann. Vorzugsweise geschieht dies anhand eines Auswahlmenüs, in welchem der Nutzer einzelne Vorgaben aktiviert oder deaktiviert. Das System, insbesondere der Dienste-Rechner, steuert dann das Einlogg-Verfahren entsprechend den vom Nutzer aktivierten Vorgaben. Der Nutzer hat also die Kontrolle über die Absicherung des Zugangs zu seinem Nutzer-Konto innerhalb des Nutzer-Dienstes. Beispielsweise kann der Nutzer eines Email-Dienstes selbst bestimmen, ob das Einloggen in sein Email-Konto nur mit zusätzlichem Hardware-Stecker möglich sein soll oder ob das Einloggen zumindest für einen bestimmbaren Zeitraum oder für eine bestimmbare Anzahl von Versuchen auch nur über die Eingabe der LogIn-Daten (User ID und Passwort) erlaubt sein soll.

Weitere Vorteile und bevorzugte Ausgestaltungen der Erfindung ergeben sich auch aus den Unteransprüchen:

Demnach ist es besonders vorteilhaft, wenn die zu prüfenden Vorgaben in dem Nutzerprofil von dem Nutzer mittels eines Auswahlmenüs bzw. -schemas aktiviert oder deaktiviert werden. Dadurch kann der Nutzer, beispielsweise über das einfache Anklicken von Checkboxen, sehr komfortabel die Einlogg-Vorgaben bestimmen und jederzeit schell ändern.

Auch ist es von Vorteil, wenn die Vorgaben angeben, ob für ein erfolgreiches Einloggen sowohl die Eingabe des Zugangskennwortes wie auch zusätzlich das Einstecken eines von mehreren zugelassenen Zugangsberechtigungs-Hardwaresteckern am Nutzer-Endgerät erforderlich sind, wobei die zugelassenen Zugangsberechtigungs-Hardwarestecker vom dem Nutzer vorgeben werden. Diese Maßnahmen ermöglichen die

Von Vorteil ist es auch, wenn die zu prüfenden Vorgaben einen Zeitraum angeben, innerhalb dem das Einloggen auch ohne das Einstecken eines Zugangsberechtigungs-Hardwaresteckers zulässig ist, wobei der Zeitraum von dem Nutzer vorgeben wird. Alternativ oder zusätzlich dazu können die zu prüfenden Vorgaben auch eine maximale Anzahl von Einlogg-Versuchen angeben, für die das Einloggen auch ohne das Einstecken eines Zugangsberechtigungs-Hardwaresteckers zulässig ist, wobei die maximale Anzahl von dem Nutzer vorgeben wird.

Eine weitere vorteilhafte Ausgestaltung besteht darin, dass in dem Zugangsberechtigungs-Hardwarestecker des Nutzers das der Nutzerkennung zugeordnete Zugangskennwort gespeichert wird, und dass die zu prüfenden Vorgaben eine Option angeben, die es zulässt, dass das Zugangskennwort für das Einloggen des Nutzers automatisch von dem Zugangsberechtigungs-Hardwarestecker abgerufen wird.

Diese und weitere Vorteile werden noch deutlicher in der nachfolgenden Beschreibung konkreter Ausführungen der Erfindung.

### Beschreibung bevorzugter Ausführungsbeispiele

Die vorliegende Erfindung wird nun anhand der folgenden Figuren erläutert und näher beschrieben:
- Fig. 1: zeigt den prinzipiellen Aufbau eines Informationsnetzwerkes in Form des WorldWideWebs, in das das erfindungsgemäße System integriert ist;
- Fig. 2: zeigt am Beispiel eines Email-Dienstes die Darstellung eines Nutzer-Profils mit den vom Nutzer bestimmbaren Vorgaben für das Einloggen in sein Nutzer-Konto; und
- Fig. 3: zeigt schematisch den Ablauf eines erfindungsgemäßen Verfahrens zum Einloggen in den Nutzer-Dienst.

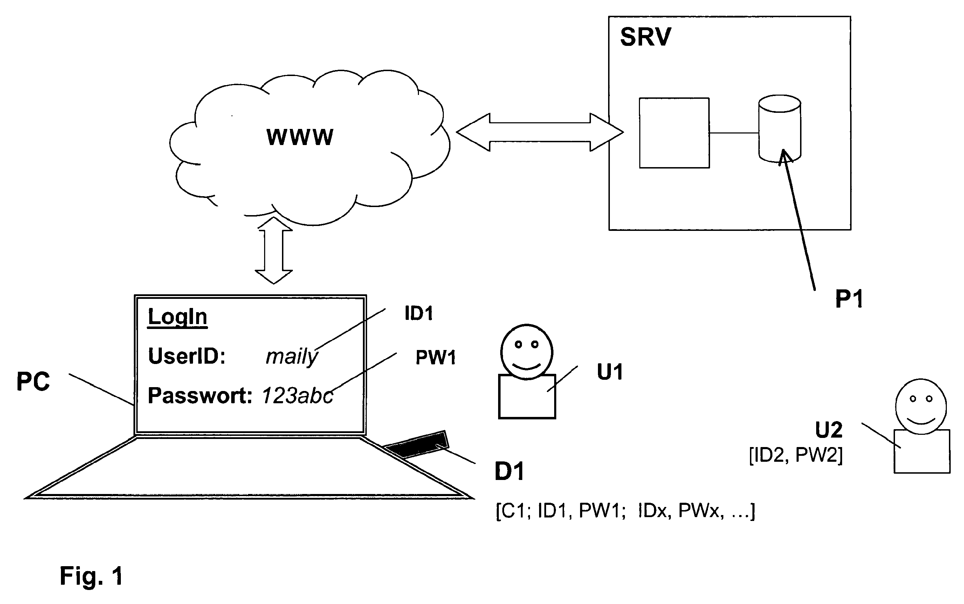

Anhand der Figur 1 werden am Beispiel eines Systems für einen Email-Dienst die erfindungsgemäßen Systemkomponenten beschrieben:

Der als Email-Dienst ausgestaltete Nutzer-Dienst SRV ist auf einem oder mehreren Dienste-Rechnern implementiert, die hier symbolisch in Gestalt eines Web-Servers repräsentiert werden. Der Web-Server ist mit dem Informationsnetz WWW, das hier z.B. das World-Wide-Web ist, verbunden, so dass von jedem beliebigen Endgerät aus mittels eines Browsers eine Internet-Verbindung mit dem Web-Server hergestellt werden kann und der Email-Dienst genutzt werden kann. Die Nutzer müssen aber für den Dienst registriert sein. In der Figur 1 sind exemplarisch ein erster Nutzer U1 und ein zweiter Nutzer U2 dargestellt, die mit ihren jeweiligen Nutzer-Daten, nämlich Nutzer-Kennung ID1 bzw. ID2 und Passwort PW1 bzw. PW2 für den Email-Dienst SRV registriert sind.

Beispielsweise kann der Nutzer U1 über sein Nutzer-Endgerät, das hier ein Personal-Computer PC ist, sich in den Email-Dienst einloggen und dort auf sein Nutzer-Konto zugreifen.

Zum Einloggen muss der Nutzer U1 in die auf dem PC-Bildschirm erscheinende Einlogg-Eingabemaske seine Nutzer-Kennung ID1, nämlich "maily", und das richtige Zugangskennwort PW1, nämlich "123abc", eingeben. Zusätzlich ist es noch erforderlich, dass der Nutzer U1 in das Endgerät PC einen Hardware-Kodierstecker, nämlich den sog. Dongle D1, einsteckt, auf dem zumindest ein Schlüsselcode bzw. Zugangskode C1 abgespeichert ist. Nur wenn der Stecker D1 mit dem richtigen Code C1 eingesteckt ist, ist überhaupt ein erfolgreiches Einloggen möglich. Somit wird der Zugriff auf den Nutzer-Dienst und insbesondere auf das Nutzer-Konto des jeweiligen Nutzers zusätzlich abgesichert. Denn nur derjenige, der den richtigen Dongle hat und auch die LogIn-Daten (User ID und Passwort) kennt, kann sich in den Email-Dienst SRV einloggen. Damit wird auch dem sog. Phishing, einer im Internet zu findenden Betrugsmasche, entgegen gewirkt, weil das herkömmliche Einloggen deaktiviert ist und somit Unberechtigte, die sich die LogIn-Daten eines Nutzers erschlichen haben, nicht (mehr) auf das Nutzer-Konto zugreifen können.

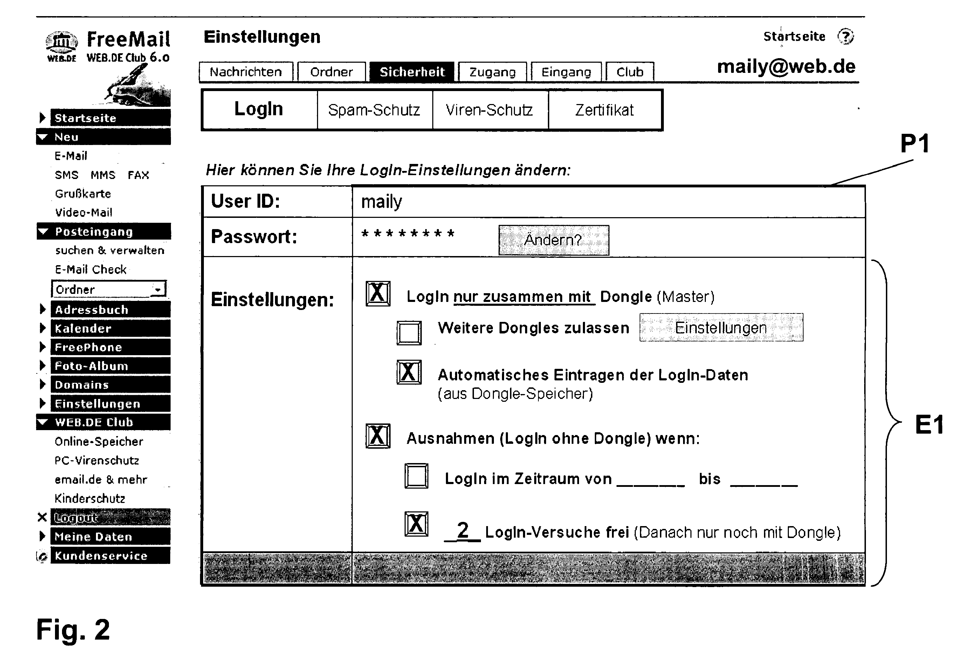

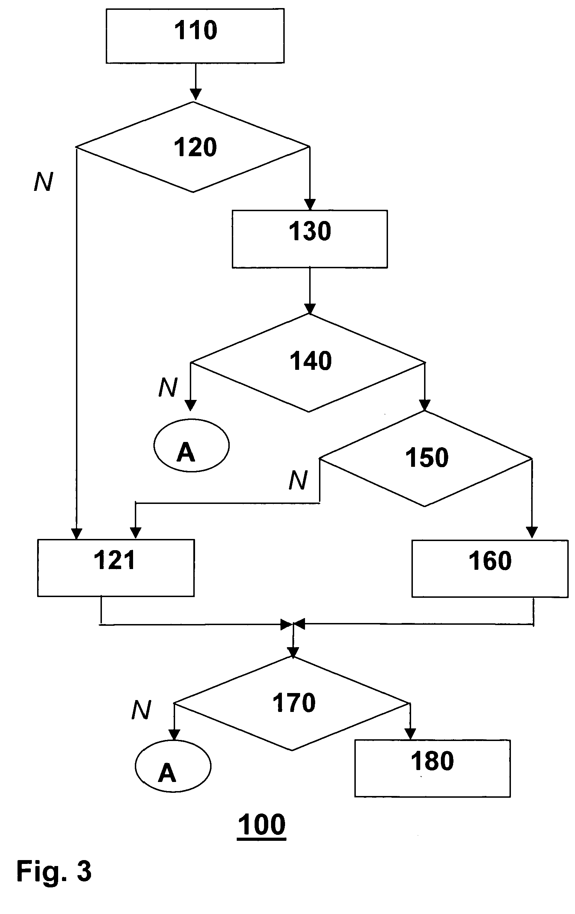

Die Vorgaben für den Ablauf der Einlogg-Prozedur sind im Nutzer-Profil P1 des jeweiligen Nutzers definiert, wobei der Nutzer selbst (hier also U1) die Vorgaben bestimmen oder zumindest auswählen kann. Wie später noch anhand der Figuren 2 und 3 genau beschrieben wird, ergeben sich für den Nutzer zahlreiche Gestaltungsmöglichkeiten.

Der Dongle D1 selbst dient aber nicht nur als reiner Hardware-Schlüssel, der den richtigen Schlüssel-Code (hier C1) enthält, sondern auch als mobiler Speicher für weitere Nutzer-Daten. Der Dongle hat dazu Speichermittel, die vorzugsweise als Flash-PROM ausgebildet sind. Wie anhand des vom Nutzer U1 benutzen Dongles D1 zu sehen ist, sind dort auch die Nutzer-Kennung ID1 und das Passwort PW1 für den Email-Dienst SRV abgespeichert. Durch Einstecken des Dongles D1 ist es somit möglich, dass das Endgerät und/oder der Web-Server auf die auf dem Dongle D1 gespeicherten Daten zugreift und diese verwendet. Vorteilhafterweise werden beim Einloggen die Nutzer-Kennung ID1 und/oder das Zugangs-Kennwort PW1 aus dem Speicher des Dongle D1 abgerufen und automatisch in das entsprechende Feld in der LogIn-Maske eingesetzt oder direkt vom Web-Server ausgewertet. Der Nutzer U1 muss diese Daten also nicht mehr manuell eingeben. Das Einloggen wird somit automatisch durchgeführt, sobald der Dongle D1 eingesteckt ist und das System, insbesondere der Web-Server den Dongle D1 als zugelassenen und richtigen Stecker erkannt hat.

Der jeweilige Nutzer, wie z.B. der Nutzer U1, kann auf seinem Hardware-Stecker D1 auch noch die Einlogg-Daten für weitere Dienste gespeichert haben, wie z.B. die Nutzer-Kennung IDx und das Passwort PWx für einen Auktions-Dienst oder dergleichen mehr. Auch die Zugriffe auf diese Dienste können durch den Dongle D1 zusätzlich abgesichert werden. Das automatische Ausfüllen von LogIn-Masken kann noch weiter abgesichert werden, indem die Nutzer-Daten nur verschlüsselt auf dem Dongle gespeichert sind und/oder nur als Fragmente, wobei die Entschlüsselung bzw. das Zusammensetzen der Fragmente mittels eines (nicht dargestellten) Servers erfolgt, der z.B. als Trust-Center fungiert. Beim Einstecken des Dongles wird dann zunächst nur der Schlüssel-Code C1 geprüft, um festzustellen, ob der Dongle für den Zugriff auf den Email-Dienst zugelassen ist. Die LogIn-Daten werden dann mittels Abfrage beim Trust-Center verifiziert und ggf. entschlüsselt und/oder zusammengesetzt sowie anschließend in die Eingabe-Maske automatisch eingefüllt oder auch direkt an den Web-Server des Dienstes SRV gesendet. Wenn auch die LogIn-Daten korrekt sind, wird das Einloggen erfolgreich abgeschlossen.

In der Figur 2 ist nun die Darstellung des Nutzer-Profils P1 im Bezug auf Sicherheitseinstellungen für das LogIn dargestellt. Die Darstellung entspricht der Anzeige auf dem Bildschirm des Nutzer-Engerätes (s. PC in Fig. 1). Der Nutzer kann hier Vorgaben E1 eintragen und verändern, insbesondere einzelne Vorgaben per Checkbox aktivieren oder deaktivieren, welche den Ablauf der Einlogg-Prozedur bestimmen und insbesondere die darin zu prüfenden Kriterien bestimmen. Das Verfahren für die Einlogg-Prozedur wird am Beispiel der Figur 3 beschrieben. Daher wird im Folgenden auf beide Figuren 2 und 3 Bezug genommen:

Wie anhand der Figur 2 zu sehen ist, hat sich der Nutzer in sein Email-Konto "maily@web.de" eingeloggt und ist über das Menü "Sicherheit" in das Untermenü "LogIn" gegangen, um dort bestimmte Vorgaben E1 in seinem Nutzerprofil P1 einzusehen und ggf. zu ändern. Für die LogIn-Einstellungen kann er z.B. das aktuelle Passwort ändern. Darüber hinaus kann er aber auch anhand der Vorgaben bzw. Einstellungen E1 konkrete Merkmale für die Einlogg-Prozedur eintragen und aktivieren. Eine wesentliche Einstellung ist die erste Option, nämlich die Aktivierung "LogIn nur zusammen mit Dongle", d.h. eine Aktivierung der Überprüfung eines zugelassenen Zugangsberechtigungs-Hardwaresteckers. Hat der Nutzer diese Option gewählt bzw. aktiviert, dann prüft das System bei jedem LogIn-Versuch zusätzlich ob auch ein passender Dongle (s. D1 in der Fig. 1) eingesteckt worden ist. Für den LogIn-Versuch reicht es aus, dass der Nutzer lediglich sein Nutzer-Kennung (User ID) eingibt, also hier ID1="maily". Das System kann dann bereits den Nutzer erkennen, sein Profil überprüfen und das Einlogg-Verfahren entsprechend weiter steuern.

In dem in der Figur 3 gezeigten Ablaufdiagramm des Verfahrens 100 bedeutet dies, dass nach einem Einlogg-Versuch im Schritt 110 dann in einem Schritt 120 geprüft wird, ob der Nutzer die erste Option "LogIn nur mit Dongle" in seinem Nutzer-Profil aktiviert hat. Ist dies nicht der Fall, dann folgt in einem Schritt 121 lediglich die Abfrage des Passwortes (hier "123abc") und die anschließende Überprüfung des Passworts im Schritt 170.

Ist dies der Fall, d.h. wurde die Option "LogIn nur mit Dongle" aktiviert, dann wird anhand der Schritte 130 ff. weiter verfahren:

Zunächst schickt der Web-Server im Schritt 130 eine Anfrage (request) an das Nutzer-Endgerät bzw. an den dort laufenden Client (Anwenderprogramm). Dieser prüft, ob überhaupt ein Dongle (s. D1 in Fig.1) eingesteckt ist. Sofern, dass nicht der Fall ist, ergeht sogleich eine Mitteilung an den Web-Server, der dann im Schritt 140 feststellt, dass ein Dongle fehlt -also die Vorgabe nicht erfüllt wird- und dann die Einlogg-Prozedur mit dem Schritt A abbricht. Sofern ein Dongle eingesteckt ist, werden die darin gespeicherten Daten (s. C1, ID1, PW1 in der Fig. 1) mittels des Clients ausgelesen, an den Web-Server gesendet und dort ebenfalls im Schritt 140 geprüft. Zumindest der Schlüssel-Code (hier: C1) wird überprüft, so dass festgestellt werden kann, ob es sich auch um einen zugelassenen Dongle handelt, mit dem der Zugriff auf den Email-Dienst und auf das Nutzer-Konto Code erlaubt ist. Diese Zulässigkeitsprüfung bzw. Verifizierung des Dongle kann auch mit Unterstützung eines Trust-Centers erfolgen.

Im Nutzer-Profil P1 kann der Nutzer auch die Vorgabe machen, dass mehrere Dongles erlaubt sind. Dazu werden dann mehrere Dongles im System unter dem Menüpunkt "Einstellungen" registriert. Diese Option ist besonders dann von Vorteil, wenn das Nutzer-Konto von mehreren Personen genutzt werden kann, wobei jede Person einen eigenen Dongle hat. Beispielswiese kann ein Email-Konto für den Zugriff durch mehrere Mitglieder einer Familie, eines Vereins oder einer Firma bzw. Abteilung vorgesehen werden. Der eigentliche Nutzer hat dann vorzugsweise den Haupt-Stecker (Master-Dongle) und kann als einziger die Einstellungen im Nutzer-Profil ändern. Dieser Nutzer ist quasi der Administrator des Kontos. Die übrigen Mitglieder haben einen einfachen Dongle und bekommen nur Zugriff auf den Dienst selbst. Aber sie erhalten keinen oder nur einen beschränkten Zugriff auf das Nutzer-Profil. Das bedeutet, dass diese einfachen Nutzer das Profil nicht einsehen können oder zumindest keine Änderungen darin vornehmen können.

Wichtig ist, dass der jeweils eingesteckte Dongle zugelassen ist. Das kann entweder direkt über die beim Nutzer-Dienst (s. SRV in Fig.1) hinterlegten Registrierungs- und Profilangaben geschehen oder teilweise auch mit Unterstützung eines externen Dienstes, der als Trust-Center fungiert und die Dongles programmiert. Wird im Schritt 140 festgestellt, dass der jeweilige Dongle zugelassen und im System für den Zugriff auf den Nutzer-Dienst registriert bzw. berechtigt ist, dann wird im Schritt 150 eine weitere Vorgabe bzw. Option geprüft bzw. überprüft.

Die im Schritt 150 überprüfte Vorgabe betrifft eine weitere vom Nutzer wählbare Option, nämlich die Option "Automatisches Eintragen der Login-Daten" (s. Fig. 2). Das bedeutet, dass der Nutzer im Profil P1 auch vorgeben kann, ob das System diese Daten vom Dongle lesen und automatisch eintragen soll, wodurch der Nutzer sich die manuelle Daten-Eingabe in die LogIn-Maske erspart. Ist die Option aktiviert, so erfolgt im Schritt 160 der automatische Eintrag von LogIn-Daten. Im vorliegenden Beispiel braucht lediglich das Passwort eingetragen zu werden. Ist die Option deaktiviert, so geht das Verfahren zum Schritt 121 über, in welchem dann der Nutzer zur manuellen Eingabe des Passwortes aufgefordert wird bzw. ein bereits beim LogIn-Versuch im Schritt 110 eingegebenes Passwort für die Einlogg-Prozedur übernommen wird.

Wenn entweder im Schritt 160 oder 121 ein Passwort-Eintrag automatisch bzw. manuell durchgeführt wurde, wird anschließend im Schritt 170 dieses Passwort überprüft. Das geschieht durch Vergleich mit dem im Profil hinterlegten Passwort. Ist das Passwort korrekt, so wird im Schritt 180 die Einlogg-Prozedur erfolgreich abgeschlossen. Der Nutzer hat also vollen Zugriff auf den Email-Dienst und auf sein Nutzer-Konto. Ist das Passwort falsch, so wird die Prozedur mit dem Schritt A abgebrochen. Alternativ dazu kann auch eine Schleife zurück zum Schritt 121 folgen, so dass der Nutzer zu einer (erneuten) Eingabe des Passwortes aufgefordert wird.

Für ein eingehenderes Verständnis des Ablaufes der Einlogg-Prozedur wird darauf hingewiesen, dass die Fig. 2 sich auf den Fall bezieht, dass der Nutzer bereits eingeloggt ist und in seinem Profil P1 Einstellungen bzw. Vorgaben E1 vornimmt, die dann für zukünftige Einlogg-Versuche gelten. Die Fig. 3 zeigt dann den Verfahrensablauf für die Einlogg-Prozedur entsprechend diesen im Profil gemachten Vorgaben.

Wie die Fig. 2 verdeutlicht, sind noch viele weitere Einstellungen und Vorgaben denkbar, die im Zusammenhang mit dem Einloggen in den Email-Dienst als aktivierbare Optionen dem Nutzer angeboten werden. Der Nutzer braucht im einfachsten Fall nur eine entsprechende Checkbox anzuklicken oder einfache Eingaben in vorgefertigten Eingabefeldern vorzunehmen. Für den Fall, dass der Nutzer manchmal auch ohne den Hardwarestecker (Dongle) einen Zugang zu seinem Nutzer-Konto haben möchte, kann er Ausnahmen bestimmen, die dies zumindest für eine vorgebbare Zeitspanne oder für eine vorgebbare Anzahl von Einlogg-Versuchen ermöglichen. Solche Ausnahme-Optionen sind für den Nutzer besonders dann interessant und nützlich, wenn er den Dongle nicht mit sich führen kann oder will, also beispielsweise wenn der Nutzer im Urlaub ist, wenn er sich auf einer Dienstreise befindet und in ähnlichen Situationen. In solchen Fällen kann er sich dann auch ohne Dongle einloggen, beispielsweise von einem im Hotel befindlichen Internet-Anschluss oder von einem Internet-Cafe aus usw.. Somit kann in solchen Ausnahmefällen auch ein herkömmliches Einloggen erlaubt werden, also ein LogIn allein mit User ID und Passwort.

Damit aber dennoch eine höhere Sicherheit als in herkömmlichen Systemen bestehen bleibt, gelten die Ausnahmen nicht unbeschränkt. Beispielsweise ist das herkömmliche Einloggen nur für einen bestimmten Zeitraum (z.B. Urlaubszeit) und/oder für eine endliche Anzahl von LogIn-Versuchen (z.B. für maximal 2 LogIn-Versuche) erlaubt.

Die Vorgaben im Nutzer-Profil können aber noch viele weitere Optionen betreffen, insbesondere solche die auf die Art oder Eigenschaften des jeweils verwendeten Endgerätes eingehen. Denn der Nutzer-Dienst (hier z.B. Email-Dienst) kann über jedes mit dem Informationsnetz (Internet) verbundene Endgerät erreicht werden. Dabei können auch drahtlose Funk-Netzverbindungen genutzt werden, so dass der Nutzer z.B. ein Notebook mit WLAN-Karte oder ein UMTS-Mobilfunk-Endgerät usw. benutzt. Insbesondere für die Fälle, dass der Nutzer zumindest zeitweise sehr kompakte mobile Geräte, wie z.B. einen PalmTop oder einen PDA benutzt, kann eine Ausnahme-Option sinnvoll sein, die ein herkömmliches Einloggen nur bei Benutzung eines solchen Gerätes erlaubt. Denn das Einstecken von Dongles in solche Geräte ist oft sehr mühsam oder gar unmöglich, weil das Gerät nicht über die erforderliche Schnittstelle verfügt. Das System würde dann z.B. anhand des verwendeten Browsers erkennen, dass es sich um eine Version für Mobilgeräte handelt und könnte das LogIn vereinfachen.

Die hier beschriebene zusätzliche Sicherung für das Einloggen in einen Internet-Dienst durch Einsatz eines Hardwaresteckers in Kombination mit der (automatischen) Eingabe von Einlogg-Daten ist für viele Internet-Dienste realisierbar. Dabei kann diese zusätzliche Sicherungsfunktion auch exklusiv für solche Nutzer bereitgestellt werden, die Premium-Dienste nutzen und in dem jeweiligen Dienst als sog. "Premium-Member" oder "Club-Mitglied" registriert sind.

Die Erfindung wurde anhand von einem Email-Dienst beschrieben, ist aber nicht auf diese Anwendung beschränkt. Vielmehr kann die Erfindung in den unterschiedlichsten Bereichen eingesetzt werden, wo immer Nutzer-Dienste über Online-Verbindungen angeboten werden, wie z.B. auch Auktionsdienste, Nachrichtendienste, Portaldienste, Datenbankdienste, Bezahldienste, insbesondere Online-Banking oder Einkaufs-Dienste (Online-Shopping) und dergleichen mehr.

### Bezugszeichenliste

- WWW: Informationsnetz, WorldWideWeb
- SRV: Web-Dienst mit Web-Server
- U1, U2: Nutzer
- P1: Nutzer-Profil für Nutzer U1, gespeichert für den Web-Dienst
- PC: Personal-Computer als Nutzer-Endgerät
- D1: Hardware-Schlüssel (Dongle) des Nutzers U1
- E1: Einstellungen im Nutzer-Profil P1
- ID1: Nutzer-Kennung (User ID) für Nutzer U1
- PW2: Zugangs-Kennwort (Passwort) für Nutzer U1
- 100: Verfahren mit Schritten 110 bis 180

## Patentansprüche

1. Verfahren (100) zum Einloggen eines Nutzers (U1) über ein mit einem Informationsnetz (WWW) verbundenen Nutzer-Endgerät (PC) in einen in dem Informationsnetz (WWW) angebotenen Nutzer-Dienst (SRV) mit folgenden Schritten:
- mittels einer Eingabe einer Nutzerkennung (ID1), die dem Nutzer (U1) zugeordnet ist, wird das Einloggen in den Nutzer-Dienst (SRV) versucht (Schritt 110);
- mittels Vorgaben (E1) in einem Nutzerprofil (P1), das dem Nutzer (U1) zugeordnet ist, wird geprüft, ob für ein erfolgreiches Einloggen sowohl die Eingabe eines Zugangskennwortes (PW1) wie auch zusätzlich das Einstecken eines Zugangsberechtigungs-Hardwaresteckers (D1) am Nutzer-Endgerät (PC) erforderlich sind (Schritt 120);
- falls beides erforderlich ist, werden eine Kodierung (C1) des Zugangsberechtigungs-Hardwaresteckers (D1) sowie das Zugangskennwort (PW1) geprüft (Schritte 130 bis 170),
andernfalls wird zumindest das Zugangskennwort (PW1) geprüft (Schritt 170);
- falls alle zu prüfenden Vorgaben (E1) in dem Nutzerprofil (P1) erfüllt werden, wird das Einloggen erfolgreich abgeschlossen (Schritt 180).

2. Verfahren nach Anspruch 1, bei dem die zu prüfenden Vorgaben (E1) in dem Nutzerprofil (P1) von dem Nutzer (U1) mittels eines Auswahlschemas aktiviert oder deaktiviert werden.

3. Verfahren nach Anspruch 1, bei dem die Vorgaben (E1) angeben, ob für ein erfolgreiches Einloggen sowohl die Eingabe des Zugangskennwortes (PW1) wie auch zusätzlich das Einstecken eines (D1) von mehreren zugelassenen Zugangsberechtigungs-Hardwaresteckern am Nutzer-Endgerät (PC) erforderlich sind, wobei die zugelassenen Zugangsberechtigungs-Hardwarestecker vom dem Nutzer (U1) vorgeben werden.

4. Verfahren (100) nach einem der vorhergehenden Ansprüche, bei dem die zu prüfenden Vorgaben (E1) einen Zeitraum angeben, innerhalb dem das Einloggen auch ohne das Einstecken eines Zugangsberechtigungs-Hardwaresteckers (D1) zulässig ist, wobei der Zeitraum von dem Nutzer (U1) vorgeben wird.

5. Verfahren (100) nach einem der vorhergehenden Ansprüche, bei dem die zu prüfenden Vorgaben (E1) eine maximale Anzahl von Einlogg-Versuchen angeben, für die das Einloggen auch ohne das Einstecken eines Zugangsberechtigungs-Hardwaresteckers (D1) zulässig ist, wobei die maximale Anzahl von dem Nutzer (U1) vorgeben wird.

6. Verfahren (100) nach einem der vorhergehenden Ansprüche, bei dem in dem Zugangsberechtigungs-Hardwarestecker (D1) des Nutzers (U1) das der Nutzerkennung (ID1) zugeordnete Zugangskennwort (PW1) gespeichert wird, und bei dem die zu prüfenden Vorgaben (E1) eine Option angeben, die es zulässt, dass das Zugangskennwort (PW1) für das Einloggen des Nutzers (U1) automatisch von dem Zugangsberechtigungs-Hardwarestecker (D1) abgerufen wird.

7. System zur Durchführung des Verfahrens nach einem der Ansprüche 1 bis 6.
